(19) Europäisches Patentamt
European Patent Office
Office européen des brevets

(11) EP 2 280 511 B1

(12) **FASCICULE DE BREVET EUROPEEN**

(45) Date de publication et mention
de la délivrance du brevet:
**03.10.2018 Bulletin 2018/40**

(51) Int Cl.:
**H04L 9/06** (2006.01)

(21) Numéro de dépôt: **10171520.9**

(22) Date de dépôt: **30.07.2010**

(54) **Procédé de traitement de données protégé contre les attaques par faute et dispositif associé**

Gegen Fehlerattacken geschütztes Datenverarbeitungsverfahren, und entsprechende Vorrichtung

Method for processing data protected against attacks by fault and associated device

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **30.07.2009 FR 0955371**

(43) Date de publication de la demande:
**02.02.2011 Bulletin 2011/05**

(73) Titulaire: **IDEMIA France
92700 Colombes (FR)**

(72) Inventeurs:
• **Genelle, Laurie
95270 SAINT MARTIN DU TERTRE (FR)**
• **Giraud, Christophe
33600 PESSAC (FR)**
• **Prouff, Emmanuel
75018 PARIS (FR)**

(74) Mandataire: **Santarelli
49, avenue des Champs-Elysées
75008 Paris (FR)**

(56) Documents cités:
**FR-A- 2 919 739**

• **KARPOVSKY M ET AL: "Robust protection
against fault-injection attacks on smart cards
implementing the advanced encryption
standard" DEPENDABLE SYSTEMS AND
NETWORKS, 2004 INTERNATIONAL
CONFERENCE ON FLORENCE, ITALY 28 JUNE -
1 JULY 2004, PISCATAWAY, NJ, USA,IEEE, 28
juin 2004 (2004-06-28), pages 82-90, XP010710793
ISBN: 978-0-7695-2052-0**
• **Mark Karpovsky ET AL: "DIFFERENTIAL FAULT
ANALYSIS ATTACK RESISTANT
ARCHITECTURES FOR THE ADVANCED
ENCRYPTION STANDARD", IFIP International
Federation for Information Processing, 27 August
2004 (2004-08-27), XP055011516, DOI:
10.1007/1-4020-8147-2_12 Retrieved from the
Internet:
URL:https://rd.springer.com/chapter/10.100
7%2F1-4020-8147-2_12 [retrieved on 2011-11-08]**

**Description**

La présente invention concerne un procédé de traitement cryptographique de données, en particulier protégé contre les attaques par génération de fautes, ainsi qu'un dispositif associé.

Dans certains procédés de traitement de données, en particulier dans le cadre du traitement cryptographique de données, on utilise, au sein des algorithmes de traitement, des données qui doivent rester secrètes (telles que par exemple des clés cryptographiques) pour assurer le fonctionnement du système avec la sécurité requise. Ce type de procédé est dès lors la cible d'attaques de la part d'utilisateurs malveillants qui cherchent à déjouer la sécurité du système.

Parmi ces attaques, on connaît les attaques du type par génération de fautes qui consistent à perturber tout ou partie de l'exécution normale du procédé de traitement de données (généralement mises en oeuvre par l'exécution d'un programme au sein d'un microprocesseur) afin d'obtenir, en sortie du procédé, des données différentes de celles normalement attendues mais révélatrices d'informations sur les données secrètes utilisées dans l'algorithme (au contraire de ce qui est prévu dans le déroulement sans faute du programme).

Il a ainsi été prévu pour lutter contre ce type d'attaques d'ajouter des étapes complémentaires (tel que par exemple la réitération des calculs déjà effectués ou le calcul de la donnée décryptée) afin de vérifier l'exécution sans faute du procédé de traitement de données, comme décrit par exemple dans les demandes de brevet WO 2005/088895, WO 2006/103341 et FR 2 919 739.

Dans cette dernière demande de brevet, une donnée découlant d'une première itération du calcul cryptographique est mémorisée pendant la durée de la seconde itération de ce même calcul. En variante, un calcul de décryptage de la donnée issue de la première itération est opéré pour récupérer, *a priori,* la donnée initiale.

Une comparaison est alors menée soit entre les résultats des deux itérations, soit entre des versions compressées de la donnée initiale et de celle décryptée, pour détecter une éventuelle faute d'exécution.

Toutefois, ces solutions présentent quelques inconvénients.

Entre autres, cette duplication d'opérations (double itération ou cryptage/décryptage) entraîne un surcoût important en temps de calcul pouvant être préjudiciable pour des traitements en temps réel.

Par ailleurs, ces solutions ne protègent pas les systèmes des attaques par faute réalisées de façon symétrique sur les deux itérations d'un même calcul. De telles attaques aboutissent à des résultats identiques pour les deux itérations, et donc à une comparaison positive.

Enfin, ces techniques restent génériques car elles s'appliquent à l'ensemble d'un algorithme cryptographique, tel que le DES (*Data Encryption Standard*), sans tenir compte des transformations composant cet algorithme.

On connaît également la publication « Differential Fault Analysis Attack Resistant Architectures for the Advanced Encryption STANDARD » (Karpovsky et al., 24 août 2004) qui décrit la protection d'une mise en oeuvre matérielle AES. Notamment les transformations linéaires d'AES sont protégées par l'utilisation d'un prédicteur linéaire basé sur une simplification des opérations linéaires et la comparaison de la sortie du prédicteur linéaire avec la somme des sorties des transformations linéaires AES originales.

Dans ce contexte, l'invention propose notamment un procédé de traitement cryptographique de données tel que défini dans la revendication 1.

Ce traitement cryptographique comprend au moins une transformation d'une donnée d'entrée en une donnée de résultat.

Le procédé comprend une étape de vérification de ladite transformation, dans lequel la vérification de la transformation comprend les étapes suivantes:

- obtention d'une première donnée compressée par application d'une opération de compression sur ladite donnée de résultat;
- obtention d'une deuxième donnée compressée par application de l'opération de compression sur ladite donnée d'entrée;
- détermination d'une donnée de vérification par application de ladite transformation sur ladite deuxième donnée compressée et;
- comparaison de ladite donnée de vérification et de ladite première donnée compressée.

Les données compressées sont généralement des condensats ou empreintes ("*digest value*") issues d'une fonction de hachage.

Selon l'invention, on opère la vérification des traitements à l'aide des condensats de données. Le condensat du résultat de la transformation est vérifié au regard du résultat de la transformation appliquée au condensat de la donnée initiale.

Les ressources utilisées pour ces calculs de vérification manipulent des condensats et sont donc réduites: temps de calcul, espace mémoire occupé.

Par ailleurs, le procédé selon l'invention s'applique, au sein d'un algorithme cryptographique, transformation par transformation. On peut donc aisément adopter des opérations de compression spécifiques à chaque transformation. Le taux de détection des erreurs ainsi que le temps nécessaire à cette détection pour chacune de ces opérations n'en est que meilleure.

La présente invention s'applique en particulier au cryptage AES (*Advanced Encryption Standard*).

En fonction du résultat de la comparaison, on peut donc détecter une faute dans l'exécution de la transformation et donc potentiellement une attaque par faute sur le traitement cryptographique. Dans ce cas, au moins une erreur est générée lorsque ladite donnée de vérification et ladite première donnée compressée sont distinctes.

Dans un mode de réalisation, ladite opération de compression comprend la multiplication de composantes de la donnée de résultat ou d'entrée.

La nature multiplicative de l'opération de compression est particulièrement bien adaptée à la vérification de transformations non linéaires de type multiplicatives, et notamment faisant intervenir des puissances, comme par exemple la transformation MIT (*Multiplicative inverse Transformation*) composant l'opération *SubByte* d'AES.

Selon une caractéristique particulière, la donnée compressée est le produit de toutes les composantes de la

$$DV = \prod_i x_i,$$

donnée de résultat ou d'entrée: où DV est la donnée compressée, $(x_i)_i$ sont les composantes de la donnée de résultat ou d'entrée.

En particulier, lesdites composantes nulles sont corrigées de sorte à prendre la valeur "1" dans ledit produit, par exemple en ajoutant une fonction dirac de la composante et valant 1 pour une composante nulle, et 0 autrement.

Ainsi, on peut également détecter les fautes appliquées sur des composantes nulles ou générant des composantes nulles. On améliore donc la détection de fautes.

Selon une caractéristique particulière, l'étape de vérification comprend la vérification qu'à une composante nulle de la donnée d'entrée ou de résultat correspond une composante nulle de la donnée de résultat ou d'entrée.

On vérifie ici l'ensemble des cas non couverts par la nature multiplicative de l'opération de compression, en particulier lorsqu'une composante d'entrée ou de résultat est nulle. L'ensemble des fautes est ainsi détecté.

Cette vérification peut avantageusement avoir lieu antérieurement auxdites obtentions, détermination et comparaison pour réduire les traitements en évitant ces étapes si une faute est déjà détectée.

Un exemple de vérification pour la transformation MIT (qui laisse uniquement 0 invariant) consiste en l'utilisation d'une formule sommant (OU Exclusif), deux à deux, les diracs (valant 1) des composantes d'entrée et de résultat.

Cette vérification parallèle permet de simplifier l'expression et le calcul de l'opération de compression. Notamment, on exclut, dudit produit, les composantes nulles.

Dans un mode de réalisation de l'invention, on duplique lesdites étapes d'obtention, détermination et comparaison avec au moins un deuxième opération de compression. On rappelle que ces étapes opèrent sur les condensats. Leur duplication reste ainsi toujours favorable au regard de la double itération des techniques de l'art antérieur.

Cette configuration permet d'améliorer la détection des fautes en cas de fautes multiples identiques, par exemple des fautes affectant deux octets du bloc AES. La deuxième opération est notamment différente de la première opération de compression.

On voit qu'au travers de cette duplication, on utilise conjointement les deux types de condensats qui se complètent.

En particulier, dans un mode de réalisation, ladite deuxième opération de compression est de la forme

$$DV = \prod_i \left( x_i + \delta_0(x_i) \right)^{i+1},$$

où DV est la donnée compressée, $(x_i)_i$ sont les composantes de la donnée de résultat ou d'entrée. Cette configuration s'applique par exemple à la transformation MIT d'AES.

On note ici que la mise en oeuvre de la vérification des composantes nulles telle que décrite ci-dessus, combinée à ces deux opérations de compression, permet d'améliorer sensiblement la détection des attaques par faute lors de la transformation MIT, et notamment celles affectant deux octets du blocs AES.

Dans un mode de réalisation de l'invention, le traitement cryptographique comprend une pluralité de transformations consécutives pour générer des données cryptées, et le procédé comprenant une dite vérification pour chacune de plusieurs desdites transformations.

Grâce à l'invention, on réalise ici une vérification spécifique de chacune des transformations composant l'algorithme cryptographique. Cette vérification spécifique, au travers d'une opération de compression propre et adaptée, permet d'améliorer l'efficacité de cette détection et d'obtenir des informations plus précises sur l'instant où la faute est intervenue.

Notamment, pour une première transformation et une deuxième transformation consécutives ladite obtention d'une première donnée compressée pour la première transformation est postérieure à l'application de la deuxième transformation sur la donnée de résultat de la première transformation et à l'étape d'obtention d'une deuxième donnée compressée pour ladite deuxième transformation. Cette disposition permet de garantir la détection de faute même lorsque cette dernière est réalisée entre l'exécution de deux transformations, alors qu'on procède à une vérification individualisée sur chacune des transformations.

Dans un mode de réalisation, le traitement cryptographique est de type symétrique.

En particulier, le traitement cryptographique est au moins une ronde du standard de chiffrement avancé (*Advanced Encryption Standard* ou *AES*).

Corrélativement, l'invention concerne également un dispositif de traitement cryptographique de données tel que défini par la revendication 11. Le traitement cryptographique comprend au moins une transformation d'une donnée d'entrée en une donnée de résultat. Le dispositif comprend :

- un moyen d'obtention d'une première donnée compressée par application d'une opération de compression sur ladite donnée de résultat ;
- un moyen d'obtention d'une deuxième donnée compressée par application de l'opération de compression sur ladite donnée d'entrée ;
- un moyen de détermination d'une donnée de vérification par application de ladite transformation sur ladite deuxième donnée compressée et ;
- un moyen de comparaison de ladite donnée de vérification et de ladite première donnée compressée, de sorte à vérifier ladite transformation.

Un tel dispositif peut être une entité électronique de poche, tel qu'une carte à microcircuit, par exemple conforme à la norme ISO7816 ; en variante, il peut s'agir d'un autre type d'entité électronique, comme par exemple un ordinateur (tel un ordinateur personnel) ou une clé USB.

De façon optionnelle, le dispositif peut comprendre des moyens se rapportant aux caractéristiques du procédé de traitement exposé précédemment.

Les procédés évoqués ci-dessus sont typiquement mis en oeuvre au moyen de l'exécution des instructions d'un programme d'ordinateur par un microprocesseur. L'exécution des instructions permet ainsi le traitement par le microprocesseur des données mémorisées dans le dispositif, par exemple au sein d'une mémoire vive de celui-ci. D'autres modes de réalisation pourront toutefois être envisagés, comme par exemple l'utilisation d'un circuit à application spécifique apte à mettre en oeuvre les étapes des procédés envisagés ci-dessus.

Dans ces différents contextes, les données d'entrée peuvent être des données reçues par le dispositif de traitement d'un dispositif extérieur, par exemple au moyen d'une interface de communication du dispositif de traitement. Il peut toutefois s'agir également de données mémorisées dans le dispositif (par exemple en mémoire non-volatile) ou de données intermédiaires obtenues à partir des données de résultat d'une autre transformation.

De même, au moins une des données de résultat peut être une donnée à émettre en sortie du dispositif, par exemple à destination du dispositif extérieur au moyen de l'interface de communication. Les données de résultat peuvent toutefois n'être que des données intermédiaires, éventuellement utilisées par le dispositif dans des processus (par exemple de calcul) ultérieurs.

Chacun des algorithmes cryptographiques mentionnés ci-dessus permet par exemple de réaliser, au moins en partie, une opération de cryptage, de décryptage, de signature, d'échange de clé cryptographique ou de génération de clé cryptographique.

Dans ce type d'application, les données d'entrée sont par exemple un message (ou une partie d'un message) reçu du dispositif extérieur et qui est crypté (ou décrypté) au sein dispositif de traitement au moyen du ou des algorithmes cryptographiques précités, puis ré-émis en sortie du dispositif de traitement à travers l'interface de communication.

D'autres particularités et avantages de l'invention apparaîtront encore dans la description ci-après, illustrée par les dessins ci-joints, dans lesquels :

- la **figure 1** représente schématiquement les éléments principaux d'une forme de réalisation possible pour une carte à microcircuit ;
- la **figure 2** représente l'allure physique générale de la carte à microcircuit de la **figure 1** ;
- la **figure 3** illustre schématiquement l'algorithme AES pour la mise en oeuvre du procédé selon l'invention ;
- la **figure 4** représente, de façon schématique, un exemple d'étapes pour la vérification d'une transformation selon l'invention ;
- la **figure 5** représente, sous forme de logigramme, un premier exemple d'étapes pour la vérification de la transformation MIT de la **figure 3** ;
- la **figure 6** représente, sous forme de logigramme, un deuxième exemple d'étapes pour la vérification de la transformation MIT de la **figure 3,** principalement pour la détection d'erreurs multiples affectant la transformation;
- la **figure 7** représente, de façon schématique, un exemple d'étapes pour la vérification combinée de plusieurs transformations selon l'invention ; et

- la **figure 8** illustre, de façon schématique, un agencement des opérations de vérification pour deux transformations successives.

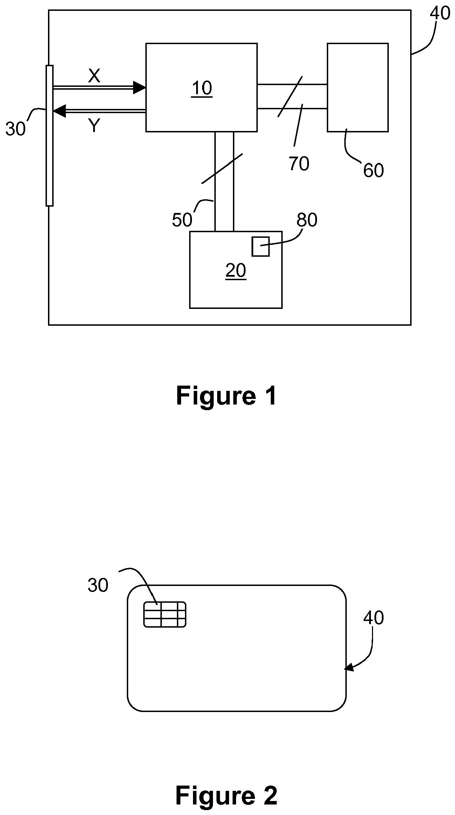

La **figure 1** représente schématiquement un dispositif de traitement de données 40 dans lequel la présente invention est mise en oeuvre. Ce dispositif 40 comprend un microprocesseur 10, auquel est associée d'une part une mémoire vive 60, par exemple au moyen d'un bus 70, et d'autre part une mémoire non volatile 20 (par exemple du type EEPROM), par exemple à travers un bus 50.

Le dispositif de traitement de données 40, et précisément le microprocesseur 10 qu'il incorpore, peuvent échanger des données avec des dispositifs extérieurs au moyen d'une interface de communication 30.

On a schématiquement représenté sur la **figure 1** la transmission d'une donnée d'entrée X reçue d'un dispositif extérieur (non représenté) et transmise de l'interface de communication 30 au microprocesseur 10. De manière similaire, on a représenté la transmission d'une donnée de sortie S du microprocesseur 10 vers l'interface de communication 30 à destination d'un dispositif extérieur. Cette donnée de sortie Y est issue d'un traitement de données par le microprocesseur 10, généralement sur la donnée d'entrée X à l'aide d'une donnée secrète 80 interne au système, par exemple une clé privée.

Bien que, pour l'illustration, les données d'entrée et les données de sortie figurent sur deux flèches différentes, les moyens physiques qui permettent la communication entre le microprocesseur 10 et l'interface 30 pourront être réalisés par des moyens uniques, par exemple un port de communication série ou un bus.

Le microprocesseur 10 est apte à exécuter un logiciel (ou programme d'ordinateur) qui permet au dispositif de traitement de données 40 d'exécuter un procédé conforme à l'invention dont des exemples sont donnés dans la suite. Le logiciel est composé d'une série d'instructions de commande du microprocesseur 10 qui sont par exemple stockées dans la mémoire 20.

En variante, l'ensemble microprocesseur 10 - mémoire non-volatile 20 - mémoire vive 60 peut être remplacé par un circuit à application spécifique qui comprend alors des moyens de mise en oeuvre des différentes étapes du procédé de traitement de données.

La **figure 2** représente une carte à microcircuit qui constitue un exemple de dispositif de traitement de données conforme à l'invention tel que représenté à la **figure 1.** L'interface de communication 30 est dans ce cas réalisée au moyen des contacts de la carte à microcircuit. La carte à microcircuit incorpore un microprocesseur 10, une mémoire vive 60 et une mémoire non volatile 20 comme cela est représenté sur la **figure 1.**

Cette carte à microcircuit est par exemple conforme à la norme ISO 7816 et munie d'un microcontrôleur sécurisé qui regroupe le microprocesseur (ou CPU) 20 et la mémoire vive 60.

En variante, le dispositif de traitement de données peut être une clef USB, un document ou un support d'informations papier comportant dans l'une de ses feuilles un microcircuit associé à des moyens de communication sans contact. Il s'agit de manière préférée d'une entité électronique portable ou de poche.

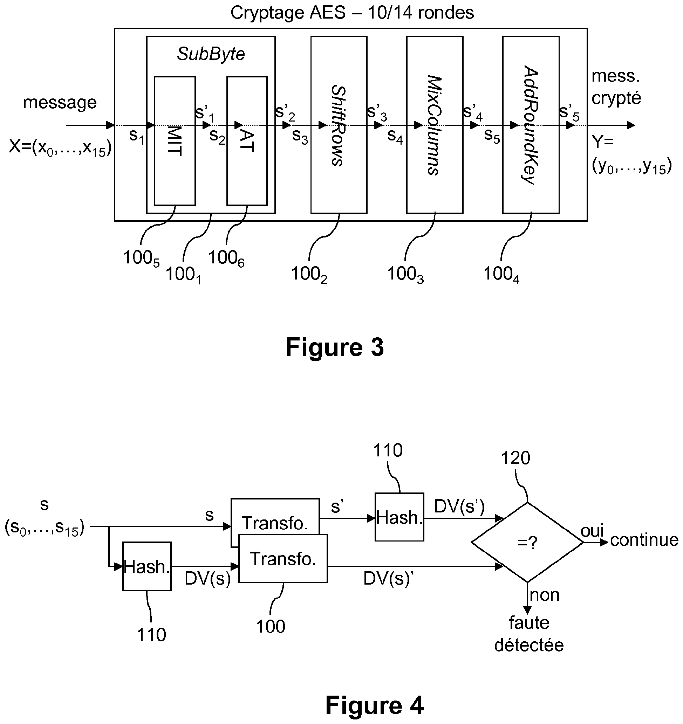

En référence aux **figures 3** à **6,** on décrit maintenant un exemple de procédé selon l'invention appliqué à un traitement cryptographique symétrique de type AES, au cours duquel le microprocesseur 10 souhaite crypter un message X en un message crypté Y.

La **figure 3** illustre schématiquement l'algorithme AES qui prend en entrée un bloc de 16 octets du message à traiter: $X = (x_i)_{i=0...15} \in GF(2^8)^{16}$.

L'encryptage AES exécute une séquence de rondes, généralement 10, 12 ou 14, comprenant les transformations individuelles représentées sur la figure.

Les quatre étapes principales d'une ronde sont l'opération non linéaire (selon l'addition bit à bit) *SubByte* $100_1$ de substitution de chaque octet $x_i$ à l'aide d'une boîte *S-Box,* puis les opérations linéaires *ShiftRows* $100_2$ de transposition cyclique, *MixColumns* $100_3$ de produit matriciel et *AddRoundKey* $100_4$ de combinaison de chaque octet avec une clé de ronde.

Les opérations *SubByte* et *ShiftRows* peuvent toutefois être inversées, par rapport à l'ordre de la figure, sans impacter l'algorithme.

Ces différentes étapes sont définies dans la norme AES et ne seront par conséquent pas décrites en détail au-delà de ce qui intéresse la présente invention. Chaque étape est vue comme une transformation individuelle de l'algorithme, avec en outre l'étape *SubByte* qui peut être décomposée en deux autres transformations individuelles: une transformation, non linéaire, inverse multiplicative $100_5$ notée MIT (*Multiplicative Inverse Transformation*) et une transformation, linéaire, affine $100_6$ notée AT (*Affine Transformation*). Ainsi, S-Box($x_i$) = AT o MIT($x_i$).

Comme illustré sur la **figure 4,** chaque transformation $100_i$ reçoit une donnée d'entrée $s=(s_0, ..., s_{15}) \in GF(2^8)^{16}$ et fournit en sortie, une donnée de résultat $s'=(s'_0, ..., s'_{15})$.

Selon l'invention, on adjoint, à cette transformation, une étape de vérification comprenant:

- l'obtention d'une première donnée compressée DV(s') par application d'une opération de compression 110 sur ladite donnée de résultat s';

**5**

- l'obtention d'une deuxième donnée compressée DV(s) par application de l'opération de compression 110 sur ladite donnée d'entrée s;
- la détermination d'une donnée de vérification DV(s)' par application de la transformation 100 sur ladite deuxième donnée compressée DV(s) et;
- la comparaison 120 de ladite donnée de vérification DV(s)' et de ladite première donnée compressée DV(s').

Cette comparaison permet de détecter une faute (égalité non obtenue) auquel cas une erreur est retourné au logiciel dont l'exécution conduit l'algorithme, ou de confirmer que les calculs de la transformation se sont bien déroulés.

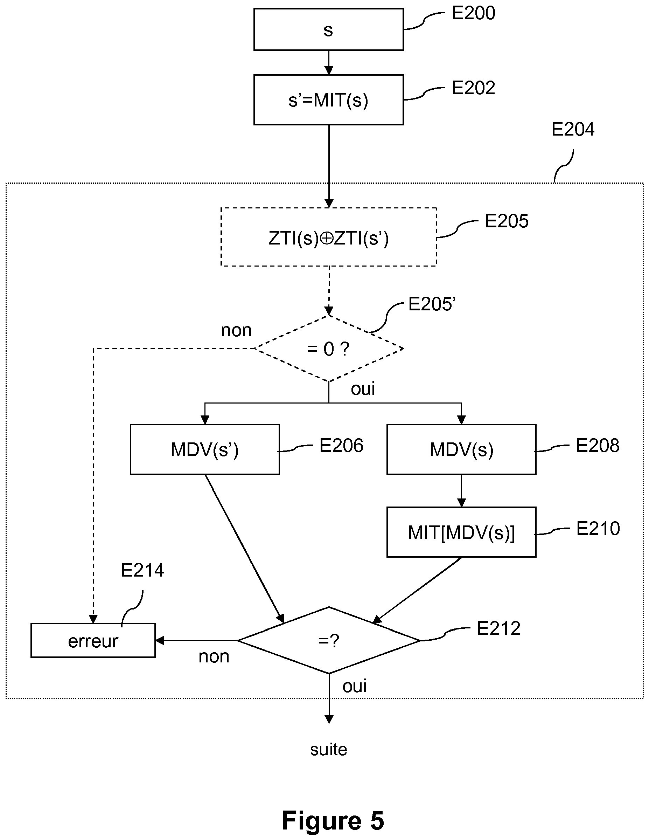

On illustre maintenant, à l'aide de la **figure 5,** la vérification d'une transformation selon l'invention en référence à la transformation MIT $100_5$,.

A l'étape E200, on dispose de la donnée d'entrée s.

A l'étape E202, on applique la transformation MIT à cette donnée d'entrée pour obtenir la donnée de résultat s'. Ces étapes sont identiques à l'état de la technique.

L'étape E204 consiste en la vérification selon l'invention.

En détail, cette étape comprend tout d'abord une étape E206 au cours de laquelle on calcule une donnée compressée, également nommée empreinte, *hash* ou *digest value,* de la donnée de résultat à l'aide d'une fonction de hachage 110.

La transformation MIT étant non linéaire pour l'addition binaire et de nature multiplicative, on prend une fonction de hachage 110 de nature également multiplicative. Dans un premier exemple simple, cette fonction, notée MDV (*mul-*

$$MDV(x) = \prod_{i=0}^{15} x_i \,,$$

*tiplicative digest value*), vaut: où $x_i$ sont les seize composantes de x.

L'étape E206 calcule donc MDV(s').

A l'étape E208, on calcule MDV(s) à l'aide de la même fonction de hachage 110, puis à l'étape E210 on applique la transformation MIT à ce résultat. On obtient MIT(MDV(s)).

$$x \rightarrow \begin{cases} 0 & si & x = 0 \\ x^{-1} & autrement \end{cases},$$

Puisque MIT est la transformation inverse: les deux valeurs calculés aux étapes E206 et E210 doivent être égales en l'absence de perturbations lors du calcul de la transformation E202. Ainsi, on procède, à l'étape E212, à la comparaison de ces deux valeurs.

En cas d'inégalité, le logiciel de traitement émet (E214) une erreur à destination de l'utilisateur. Sinon, le traitement se poursuit avec la transformation suivante, ici AT, pour laquelle la donnée d'entrée est celle en sortie de la transformation MIT, donc «s'».

Cette fonction simple offre une probabilité de détection d'une unique erreur qui est raisonnable eu égard à la simplicité de mise en oeuvre. Toutefois, les erreurs de type mise à zéro d'une valeur, ou passage de 0 à une valeur non nulle ne sont pas détectées.

Afin d'améliorer cette probabilité et donc l'efficacité de la détection, l'invention propose la fonction modifiée:

$$MDV_1(x) = \prod_{i=0}^{15} \left( x_i + \delta_0(x_i) \right),$$

où $\delta_0(x)$ est un dirac valant 1 si x=0, et 0 autrement.

Cette fonction $MDV_1$ modifiée permet d'éviter d'avoir des termes nuls dans le produit. On améliore ainsi la détection des fautes dans les cas où certaines composantes, soit de la donnée d'entrée s, soit de la donnée de résultat s', sont nuls. La probabilité de détection est ainsi améliorée.

Toujours en référence à la **figure 5,** notamment aux blocs en traits discontinus, une version amélioré de la vérification E204 comprend, préalablement aux étapes E206 à E212, une première étape E205 au cours de laquelle on vérifie qu'il y a correspondance entre une composante $s_i$ nulle d'entrée et une composante $s'_i$ nulle de sortie. En effet, la fonction MIT a pour élément invariant, l'élément neutre 0. Cela permet de détecter aisément les mises à zéro d'une valeur ou les passages de 0 à une valeur non nulle.

Cette vérification E205 préliminaire est menée par le calcul de:

$$ZTI(s) \oplus ZTI(s') = \sum_{i=0}^{15} 2^i \delta_0(s_i) \oplus \sum_{i=0}^{15} 2^i \delta_0(s'_i),$$

où $\delta_0(x)$ est le dirac défini précédemment.

Puis, à l'étape E205', on vérifie que le résultat de ce calcul est nul, ce qui est le cas uniquement si, pour chaque indice i, $s_i$ et $s'_i$ sont tous deux nuls ou tous deux non nuls.

En cas de résultat non nul, une erreur est retournée à l'étape E214. Autrement, on poursuit à l'étape E206.

Ces étapes E205, E205' permettent ainsi de vérifier qu'aucune perturbation ou erreur ne s'est produite lors des calculs MIT sur ou vers une coordonnée nulle.

Combiné avec les étapes E206 et suivantes, cette vérification permet de détecter toutes les erreurs sur un seul octet (une composante) du bloc AES.

En particulier, dans ce cas, on peut simplifier la fonction de hachage MDV puisque les termes nuls ne sont

$$MDV_2(x) = \prod_{i, x_i \neq 0} x_i$$

plus à prendre en compte (ils le sont par la vérification E205): par exemple, où les termes nuls sont exclus. On note que si la comparaison E205' est vérifiée, ce sont les termes de mêmes indices qui sont exclus dans ce produit lors des étapes E206 et E208.

Les étapes E205 et E205' sont de préférence réalisées antérieurement aux étapes E206-E212 afin d'éviter l'exécution de ces dernières si une erreur est déjà détectée au niveau des composantes nulles. Toutefois, les étapes E205/E205' peuvent être réalisées indépendamment, en parallèle et/ou postérieurement.

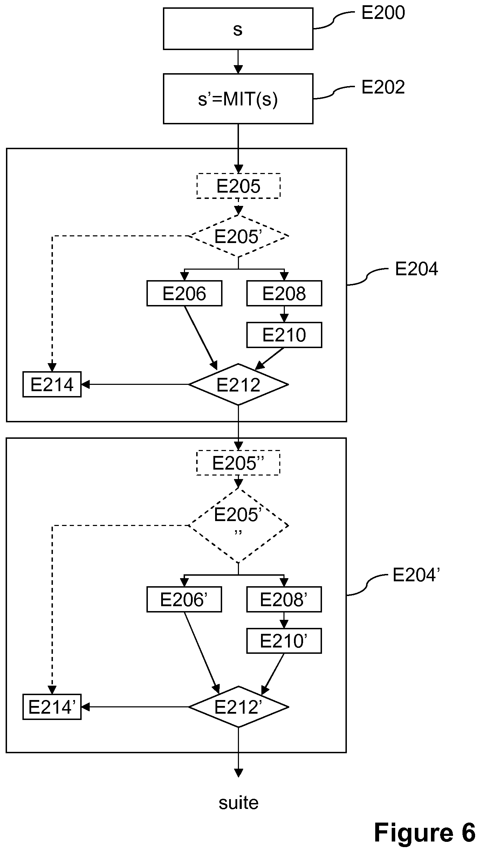

La **figure 6** illustre un exemple de vérification de la transformation MIT pour lutter contre les attaques par faute multiples affectant notamment deux octets/composantes dans le même bloc AES traité. On note toutefois que l'exemple de la **figure 5** peut être utilisé dans un tel cas, avec une probabilité de détection réduite.

Dans cet exemple, les étapes E202 à E204 sont similaires à celles de la **figure 5,** par exemple en utilisant la fonction de hachage MDV$_1$ ou MDV$_2$ définie précédemment.

L'étape de vérification E204 se poursuit par une duplication E204' des étapes E206 à E212, utilisant une autre (deuxième) fonction de hachage. Toutefois, l'étape E204' peut être menée en parallèle de l'étape E204 si les ressources matérielles de dispositif de traitement le permettent.

Un exemple de deuxième fonction de hachage est:

$$MDV_3(x) = \prod_{i=0}^{15} \left( x_i + \delta_0(x_i) \right)^{i+1} .$$

L'utilisation conjointe de MDV$_1$ (étape E204) et MDV$_3$ (étape E204') permet de détecter une erreur sur deux octets du bloc AES traité (composantes d'entrée ou de résultat).

Pour améliorer la détection des erreurs sur deux octets, notamment en ce qui concerne les composantes nulles, on met en oeuvre les étapes E205, E205' dans chacun des blocs E204 et E204'. Dans ce cas, on peut utiliser MDV$_2$ et

$$\prod_{i, x_i \neq 0} x_i^{i+1} .$$

une version simplifiée de MDV$_3$ définie par

Dans ce cas, on détecte toutes les fautes.

Les inventeurs ont remarqué que cette mise en oeuvre conjointe de MDV$_1$ (ou MDV$_2$) et MDV$_3$ permet également de détecter les erreurs dans les cas où une faute est injectée lors de la transformation surveillée et une autre faute est injectée lors des calculs des empreintes ou données compressées.

A titre illustratif maintenant, on présente des fonctions de hachage utilisées pour la vérification des autres transformations 100$_2$ (*ShiftRows*), 100$_3$ (*MixColumns*), 100$_4$ (*AddRoundKey*) et 100$_6$ (AT).

En ce qui concerne la transformation affine 100$_6$, cette dernière est définie par AT : $s_i \rightarrow A.s_i + c$, où c est une constante dans GF($2^8$) et A une matrice inversible dans GF($2^8$) également. On note que, dans GF($2^8$), AT($s_1$+$s_2$) = AT($s_1$) + AT($s_2$) + c.

$$ADV(x) = \sum_{i=0}^{15} x_i ,$$

De par la nature linéaire de AT, on prend une fonction de hachage additive, par exemple pour l'exécution d'étapes similaires à E206 et E208.

La comparaison entre les deux valeurs obtenues à ces étapes, $\sum_{i=0}^{15} s_i$ et $\sum_{i=0}^{15} s'_i$, permet de détecter une erreur (comparaison négative) ou de poursuivre (comparaison positive). Notamment, on vérifie l'égalité suivante:

$$ADV(s') = AT(ADV(s)) + c.$$

Dans le cas de la transformation AT et de la fonction de hachage ADV, l'invention permet de détecter efficacement toutes les erreurs simples résultant des attaques par faute.

Afin de permettre la détection de fautes sur deux octets/composantes lors du même traitement d'un blocs AES, on duplique les étapes de la vérification E204, similairement à ce qui a été exposé précédemment.

$$ADV_1(x) = \sum_{i=0}^{15} F_i(x_i),$$

Un exemple de deuxième fonction de hachage peut être: où $F_i$ est une fonction bijective propre à chaque composante.

On choisit notamment des fonctions $(F_i)_i$ telles que $F_j(x_i) \neq F_k(x_i)$ pour tout $j \neq k \in \{0...15\}$ et $x_i \in 2^8$, c'est-à-dire qu'elles ne se coupent pas à un point ayant une abscisse dans $2^8$.

$$ADV_1(x) = \sum_{i=0}^{15} \lambda_i . x_i,$$

En particulier, on choisit, pour une mise en oeuvre simple, où les $\lambda_i$ sont des constantes propres à chaque composante. Les constantes $\lambda_i$ sont choisies distinctes deux à deux pour garantir la détection de toutes les erreurs. En outre, on choisit ces constantes non nulles afin de détecter toutes les erreurs sur le calcul de l'empreinte $ADV_1$.

Les inventeurs ont ainsi remarqué que cette mise en oeuvre conjointe de ADV et $ADV_1$ permet également de détecter les erreurs dans les cas où une faute est injectée lors de la transformation AT et une autre faute est injectée lors des calculs des empreintes ou données compressées.

En ce qui concerne la transformation *ShiftRows* $100_2$, on rappelle qu'elle réalise une commutation cyclique des octets dans chaque ligne d'une matrice 4x4 stockant le bloc AES traité.

Cette transformation ne modifiant pas le résultat d'opérations commutatives sur chaque ligne de la matrice 4x4, des fonctions de hachage de type additive ADV et multiplicative MDV peuvent être alternativement utilisées.

A titre d'exemple, pour détecter des fautes isolées (sur un octet uniquement), on prend la fonction

$$ADV(x) = \sum_{i=0}^{15} x_i,$$

c'est-à-dire la même fonction que celle pour vérifier la transformation AT précédente.

$$\sum_{i=0}^{15} s_i = \sum_{i=0}^{15} s'_i.$$

Selon la présente invention, on vérifie donc que

Pour détecter des fautes multiples lors de la transformation *ShiftRows,* par exemple sur deux octets/compo-

$$ADV_1(x) = \sum_{i=0}^{15} x_i^{3\alpha}.$$

santes, on utilise $F_i(x) = x^{3\alpha}$, où $\alpha$ est un entier positif ajustable. Ainsi,

Le choix de $\alpha$ est un compromis entre la probabilité de détection des erreurs et la complexité des calculs (grands nombres à manipuler). Le tableau ci-dessous liste diverses probabilités théoriques de détection de fautes multiples en fonction de la valeur de $\alpha$, lorsque l'on utilise conjointement ADV et $ADV_1$.

Tableau 1: probabilité de détection en fonction de $\alpha$

| $\alpha$ | Probabilité de détection |
|---|---|
| 1 | $\dfrac{32639}{32640}$ |
| 3 | $\dfrac{32639}{32640}$ |
| 5 | $1 - \dfrac{167424}{255^2 . 256^2} \approx \dfrac{25452}{25453}$ |
| 7 | $1 - \dfrac{179520}{255^2 . 256^2} \approx \dfrac{23737}{23738}$ |

On a pu constater en outre que si une faute est injectée dans le calcul de la transformation (E202) et une autre dans le calcul des empreintes (E206, E208), la combinaison de ADV et $ADV_1$ permet de détecter toutes les erreurs/fautes dans l'opération de vérification de la transformation *ShiftRows,* lorsque c'est le calcul de $ADV_1$ qui est corrompu.

Une troisième fonction de hachage peut être prévue pour une troisième itération des étapes E206-E212. Cette troisième itération est notée E204" et permet, en combinaison avec E204 (soit ADV) et E204' (soit $ADV_1$) de détecter les erreurs multiples affectant trois composantes/octets du bloc AES.

$$ADV_2(x) = \sum_{i=0}^{15} x_i^5$$

Un exemple de troisième fonction de hachage est

Dans ce cas (triple vérification avec ADV, $ADV_1$ et $ADV_2$), la probabilité théorique de détection est de

$$1 - \frac{166072320}{255^3.256^3} \approx \frac{88780747}{88780800}$$

En ce qui concerne maintenant la transformation *MixColumns* $100_3$, qui réalise une multiplication matricielle de chaque colonne de la matrice 4x4 résultant de *ShiftRows,* on choisit une fonction de hachage de type additive, par

exemple $$ADV(x) = \sum_{i=0}^{15} x_i \ ,$$ c'est-à-dire la même fonction que celles pour vérifier les transformations AT et *ShiftRows* précédentes.

L'utilisation de cette fonction permet de détecter toutes les fautes simples de bloc AES.

Pour contrer les fautes multiples, notamment deux octets erronés, on utilise conjointement cette fonction ADV avec une deuxième fonction additive $ADV_1$ du type celle définie précédemment: $$ADV_1(x) = \sum_{i=0}^{15} \lambda_i . x_i \ .$$ Les constantes $\lambda_i$ sont notamment choisies non nulles et distinctes deux à deux pour garantir la détection de toutes les erreurs.

On a pu constater que cette utilisation conjointe est efficace pour la détection d'erreurs multiples affectant trois octets/composantes. Dans ce cas, la probabilité théorique de détection est $$1 - \frac{1}{255^2}$$

En ce qui concerne enfin la transformation *AddRoundKey* $100_4$, on peut également utiliser isolément la fonction de hachage $$ADV(x) = \sum_{i=0}^{15} x_i$$ pour détecter de simples erreurs, ou en combinaison avec la fonction

$$ADV_1(x) = \sum_{i=0}^{15} \lambda_i . x_i$$ pour détecter des erreurs multiples, notamment affectant deux octets.

La présente invention permet ainsi de vérifier individuellement chacune des transformations composant un algorithme cryptographique. Un meilleur diagnostic sur l'instant où a lieu une éventuelle attaque par faute est ainsi fourni.

En outre, l'invention réduit les calculs effectués comparativement aux solutions de l'art antérieur car elle évite la réitération de l'ensemble des calculs cryptographiques et se limite à la manipulation de condensats (ou empreintes).

Une protection des transformations et de l'algorithme de cryptage est ainsi obtenue.

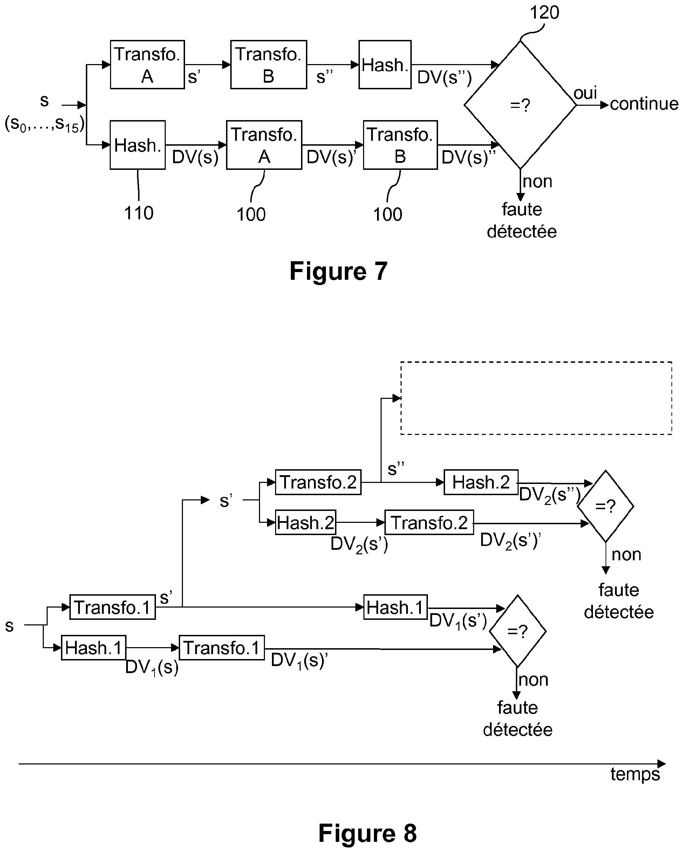

Dans un mode de réalisation illustré par la **figure 7,** on peut prévoir d'appliquer une seule fonction de compression pour réaliser la vérification commune de plusieurs transformations successives. A titre illustratif uniquement, on peut utiliser une seule fonction de compression, par exemple $$ADV(x) = \sum_{i=0}^{15} x_i \ ,$$ pour vérifier deux ou trois transformations consécutives parmi les transformations *ShiftRows, MixColumns* et *AddRoundKey*.

Cette stratégie de regroupement permet de vérifier l'ensemble des transformations composant le traitement cryptographique général à coûts réduits, en évitant de recourir à une opération de compression (et donc une vérifications) spécifique à chacune des transformations.

La **figure 8** illustre un mode de réalisation de l'invention dans lequel deux vérifications sont successivement réalisées, chacune sur une ou plusieurs transformations. Pour des raisons de concision, on a représenté sur la figure des vérifications d'une seule transformation à chaque fois (respectivement transformation 1 et transformation 2), en fonction du temps.

Le résultat s' de la première transformation est utilisé comme entrée de la seconde transformation. Et récursivement pour les transformations ultérieures (voir cadre en pointillés).

Dans ce mode de réalisation, on prévoit que l'application de l'opération de compression Hash.1 sur le résultat s' de la première transformation (pour calculer $DV_1(s')$ en vue de la vérification de cette dernière) est réalisée postérieurement à l'exploitation de ce dit résultat s' par la deuxième transformation. Cette exploitation comprend l'application de la deuxième transformation Transfo.2 sur la valeur s' pour déterminer le résultat s" à fournir aux transformations ultérieures (cadre en pointillés) et le calcul de l'opération de compression Hash.2 en vue de la vérification de la deuxième transformation (calcul de $DV_2(s')$).

En respectant cet ordre pour ces trois opérations Transfo.2, Hash.2 et Hash.1 (peu important l'ordre des autres opérations), on s'assure que le système et le procédé selon l'invention sont résistant aux attaques portant sur la mémoire, type RAM, stockant les valeurs s, s', s" etc. ou portant sur les opérations de lecture de cette RAM, entre l'application à proprement parler de deux transformations consécutives.

En effet, chaque opérations Transfo.2, Hash.2 et Hash.1 accédant à la mémoire pour récupérer s', l'ordre décrit ci-dessus permet d'éviter le scénario selon lequel la première vérification est déclarée valide par le calcul de $DV_1(s')$, la valeur s' est modifiée par une attaque, puis la deuxième transformation est réalisée sur cette valeur s'modifiée, sa vérification correspondante la déclarant valide par le calcul de $DV_2(s')$.

Les exemples qui précèdent ne sont que des modes de réalisation de l'invention qui ne s'y limite pas.

Bien que dans la description ci-dessus, on réalise une vérification pour chacune des transformations $100_2$ à $100_6$, il peut être prévu de mener de telles vérifications pour une partie uniquement de ces transformations.

En outre, on peut regrouper les vérifications des transformations MIT $100_5$ et AT $100_6$ en une seule vérification portant sur la transformation *SubByte* $100_1$.

Egalement, l'invention ne s'applique pas uniquement aux traitements de cryptage tels que décrits ci-dessus. On peut par exemple vérifier chacune des transformations composant le traitement de décryptage AES.

## Revendications

1. Procédé de traitement cryptographique de données (X) comprenant au moins une ronde du standard de chiffrement avancé AES comprenant au moins une transformation (100, $100_1$-$100_6$) composante par composante d'une donnée d'entrée (s) comprenant une pluralité de composantes ($s_i$) en une donnée de résultat (s') comprenant une pluralité de composantes ($s'_i$), ladite transformation étant la transformation, non-linéaire, multiplicative inverse MIT de l'opération SubBytes d'une ronde du standard de chiffrement avancé AES, le procédé comprenant une étape de vérification (E204) de ladite transformation, **caractérisé en ce que** la vérification de la transformation comprend les étapes suivantes:

   - obtention (E206) d'une première valeur compressée (DV(s')) par application, sur les composantes ($s'_i$) de ladite donnée de résultat (s'), d'une opération de compression (110, MDV) comprenant la multiplication (MDV) des composantes ($s'_i$) de la donnée de résultat (s') éventuellement corrigée de sorte que ses composantes nulles prennent la valeur "1" ;
   - obtention (E208) d'une deuxième valeur compressée (DV(s)) par application de l'opération de compression (110, MDV) sur les composantes ($s_i$) de ladite donnée d'entrée (s) éventuellement corrigée de sorte que ses composantes nulles prennent la valeur "1", l'opération de compression comprenant la multiplication (MDV) des composantes ($s_i$) de la donnée d'entrée (s) éventuellement corrigée ;
   - détermination (E210) d'une valeur de vérification (DV(s)') par application de ladite transformation (100, $100_1$-$100_6$) sur ladite deuxième valeur compressée (DV(s)) et;
   - comparaison (E212) de ladite valeur de vérification et de ladite première valeur compressée.

2. Procédé selon la revendication 1, dans lequel au moins une erreur est générée (E214) lorsque ladite valeur de vérification et ladite première valeur compressée sont distinctes.

3. Procédé selon la revendication 1 ou 2, dans lequel la valeur compressée (DV(s), DV(s)') est le produit de toutes les composantes de la donnée de résultat (s') ou d'entrée (s):

$$DV = \prod_i x_i ,$$

où DV est la valeur compressée, les $x_i$ sont les composantes de la donnée de résultat ou d'entrée, et les composantes $x_i$ nulles sont corrigées de sorte à prendre la valeur "1" dans ledit produit.

4. Procédé selon l'une des revendications 1 à 3, dans lequel l'étape de vérification (E204) comprend la vérification (E205, E205') qu'à une composante nulle de la donnée d'entrée (s) correspond une composante nulle de la donnée de résultat (s').

5. Procédé selon la revendication 4, dans lequel la vérification (E205, E205') qu'à une composante nulle de la donnée d'entrée (s) correspond une composante nulle de la donnée de résultat (s') comprend la vérification que le résultat de la formule suivant est nul :

$$\sum_{i=0}^{15} 2^i \delta_0(s_i) \oplus \sum_{i=0}^{15} 2^i \delta_0(s'_i),$$

où $s_i$ sont les composantes de la donnée d'entrée (s), $s'_i$ sont les composantes de la donnée de résultat (s') et $\delta_0(x)$ est un dirac valant 1 si x=0, et valant 0 autrement.

6. Procédé selon l'une des revendications précédentes, dans lequel on duplique (E204') lesdites étapes d'obtention, détermination et comparaison avec au moins une deuxième opération de compression (MDV$_3$).

7. Procédé selon la revendication 6, dans lequel ladite deuxième opération de compression (MDV$_3$) est de la forme

$$DV = \prod_i \left( x_i + \delta_0(x_i) \right)^{i+1},$$

où DV est la valeur compressée, les $x_i$ sont les composantes de la donnée de résultat (s') ou d'entrée (s).

8. Procédé selon l'une quelconque des revendications précédentes, dans lequel le traitement cryptographique comprend une pluralité de transformations (100$_1$-100$_6$) consécutives pour générer des données cryptées (Y), et le procédé comprenant une dite vérification (E204) pour chacune de plusieurs desdites transformations.

9. Procédé selon la revendication précédente, dans lequel, pour une première transformation et une deuxième transformation consécutives, ladite obtention (E206) d'une première valeur compressée (DV$_1$(s')) pour la première transformation (Transfo.1) est postérieure à l'application de la deuxième transformation (Transfo.2) sur les composantes de la donnée de résultat (s') de la première transformation et à l'étape d'obtention (E208) d'une valeur donnée compressée (DV$_2$(s')) pour ladite deuxième transformation.

10. Procédé selon l'une quelconque des revendications précédentes, dans lequel le traitement cryptographique est de type symétrique.

11. Dispositif de traitement cryptographique de données (X) comprenant au moins une ronde du standard de chiffrement avancé AES comprenant au moins une transformation (100, 100$_1$-100$_6$) composante par composante d'une donnée d'entrée (s) comprenant une pluralité de composantes (s$_i$) en une donnée de résultat (s') comprenant une pluralité de composantes (s'$_i$), ladite transformation étant la transformation, non-linéaire, multiplicative inverse MIT de l'opération SubBytes d'une ronde du standard de chiffrement avancé AES, le dispositif étant **caractérisé en ce qu'**il comprend:

   - un moyen d'obtention d'une première valeur compressée (DV(s')) par application, sur les composantes (s'$_i$) de ladite donnée de résultat (s'), d'une opération de compression (110, MDV) comprenant la multiplication (MDV) des composantes (s'$_i$) de la donnée de résultat (s') éventuellement corrigée de sorte que ses composantes nulles prennent la valeur "1" ;
   - un moyen d'obtention d'une deuxième valeur compressée (DV(s)) par application de l'opération de compression (110, MDV) sur les composantes (s$_i$) de ladite donnée d'entrée (s) éventuellement corrigée de sorte que ses composantes nulles prennent la valeur "1", l'opération de compression comprenant la multiplication (MDV) des composantes (s$_i$) de la donnée d'entrée (s) éventuellement corrigée ;
   - un moyen de détermination d'une valeur de vérification (DV(s)') par application de ladite transformation (100, 100$_1$-100$_6$) sur ladite deuxième valeur compressée (DV(s)) et;
   - un moyen de comparaison (120) de ladite valeur de vérification et de ladite première valeur compressée, de sorte à vérifier ladite transformation.

**Patentansprüche**

1. Verfahren zur kryptografischen Verarbeitung von Daten (X), umfassend mindestens eine Runde des erweiterten Verschlüsselungsstandards AES, umfassend mindestens eine Transformation (100, $100_1$-$100_6$) eines Eingangs-datenelements (s) Komponente für Komponente, umfassend eine Vielzahl von Komponenten ($s_i$), in ein Ergebnis-datenelement (s'), umfassend eine Vielzahl von Komponenten ($s'_i$), wobei die Transformation die nichtlineare multiplikative inverse Transformation MIT der Operation SubBytes einer Runde des erweiterten Verschlüsselungsstandards AES ist, wobei das Verfahren einen Schritt der Verifikation (E204) der Transformation umfasst,
   **dadurch gekennzeichnet, dass** die Verifikation der Transformation die folgenden Schritte umfasst:

   - Erhalten (E206) eines ersten komprimierten Werts (DV(s')) durch Anwenden, auf die Komponenten ($s'_i$) des Ergebnisdatenelements (s'), einer Kompressionsoperation (110, MDV), umfassend die Multiplikation (MDV) der Komponenten ($s'_i$) des Ergebnisdatenelements (s'), gegebenenfalls derart korrigiert, dass seine Komponenten Null den Wert "1" annehmen;
   - Erhalten (E208) eines zweiten komprimierten Werts (DV(s)) durch Anwenden der Kompressionsoperation (110, MDV) auf die Komponenten ($s_i$) des Eingangsdatenelements (s), gegebenenfalls derart korrigiert, dass seine Komponenten Null den Wert "1" annehmen, wobei die Kompressionsoperation die Multiplikation (MDV) der Komponenten ($s_i$) des Eingangsdatenelements (s), gegebenenfalls korrigiert, umfasst;
   - Bestimmen (E210) eines Verifikationswerts (DV(s)') durch Anwenden der Transformation (100, $100_1$-$100_6$) auf den zweiten komprimierten Wert (DV(s)); und
   - Vergleichen (E212) des Verifikationswerts und des ersten komprimierten Werts.

2. Verfahren nach Anspruch 1,
   wobei mindestens ein Fehler generiert wird (E214), wenn der Verifikationswert und der erste komprimierte Wert verschieden sind.

3. Verfahren nach Anspruch 1 oder 2,
   wobei der komprimierte Wert (DV(s), DV(s)') das Produkt aller Komponenten des Ergebnisdatenelements (s') oder Eingangsdatenelements (s) ist: $DV = \Pi x_i$, wobei DV der komprimierte Wert ist, wobei $x_i$ die Komponenten des Ergebnis- oder Eingangsdatenelements sind, und
   die Komponenten $x_i$ Null derart korrigiert werden, dass sie im Produkt den Wert "1" annehmen.

4. Verfahren nach einem der Ansprüche 1 bis 3,
   wobei der Verifikationsschritt (E204) die Verifikation (E205, E205') umfasst, dass einer Komponente Null des Eingangsdatenelements (s) eine Komponente Null des Ergebnisdatenelements (s') entspricht.

5. Verfahren nach Anspruch 4,
   wobei die Verifikation (E205, E205'), dass einer Komponente Null des Eingangsdatenelements (s) eine Komponente Null des Ergebnisdatenelements (s') entspricht, die Verifikation umfasst, dass das Ergebnis der folgenden Formel Null ist:

$$\sum_{i=0}^{15} 2^i \delta_0(s_i) \oplus \sum_{i=0}^{15} 2^i \delta_0(s'_i),$$

   wobei $s_i$ die Komponenten des Eingangsdatenelements (s) sind, $s'_i$ die Komponenten des Ergebnisdatenelements (s') sind, und $\delta_0(x)$ ein Dirac-Wert von 1 ist, wenn x = 0, und ansonsten 0 ist.

6. Verfahren nach einem der vorhergehenden Ansprüche,
   wobei die Schritte des Erhaltens, Bestimmens und Vergleichens mit mindestens einer zweiten Kompressionsope-ration ($MDV_3$) dupliziert werden (E204').

7. Verfahren nach Anspruch 6,
   wobei die zweite Kompressionsoperation ($MDV_3$) die Form $DV = \Pi(x_i + \delta_0(x_i))^{i+1}$ aufweist, wobei DV der komprimierte Wert ist, wobei $x_i$ die Komponenten des Ergebnisdatenelements (s') oder Eingangsdatenelements (s) sind.

8. Verfahren nach einem der vorhergehenden Ansprüche,

wobei die kryptografische Verarbeitung eine Vielzahl von konsekutiven Transformationen ($100_1$-$100_6$) umfasst, um verschlüsselte Daten (Y) zu generieren, und das Verfahren eine Verifikation (E204) für jede der mehreren Transformationen umfasst.

9. Verfahren nach dem vorhergehenden Anspruch,
wobei, für eine konsekutive erste Transformation und eine zweite Transformation, das Erhalten (E206) eines ersten komprimierten Werts ($DV_1$(s')) für die erste Transformation (Transfo.1) nach dem Anwenden der zweiten Transformation (Transfo.2) auf die Komponenten des Ergebnisdatenelements (s') der ersten Transformation und dem Schritt des Erhaltens (E208) eines komprimierten Datenwerts ($DV_2$(s')) für die zweite Transformation erfolgt.

10. Verfahren nach einem der vorhergehenden Ansprüche,
wobei die kryptografische Verarbeitung vom symmetrischen Typ ist.

11. Vorrichtung zur kryptografischen Verarbeitung von Daten (X), umfassend mindestens eine Runde des erweiterten Verschlüsselungsstandards AES, umfassend mindestens eine Transformation (100, $100_1$-$100_6$) eines Eingangsdatenelements (s) Komponente für Komponente, umfassend eine Vielzahl von Komponenten ($s_i$), in ein Ergebnisdatenelement (s'), umfassend eine Vielzahl von Komponenten ($s'_i$), wobei die Transformation die nichtlineare multiplikative inverse Transformation MIT der Operation SubBytes einer Runde des erweiterten Verschlüsselungsstandards AES ist, wobei die Vorrichtung **dadurch gekennzeichnet ist, dass** diese umfasst:

- ein Mittel zum Erhalten eines ersten komprimierten Werts (DV(s')) durch Anwenden, auf die Komponenten ($s'_i$) des Ergebnisdatenelements (s'), einer Kompressionsoperation (110, MDV), umfassend die Multiplikation (MDV) der Komponenten ($s'_i$) des Ergebnisdatenelements (s'), gegebenenfalls derart korrigiert, dass seine Komponenten Null den Wert "1" annehmen;
- ein Mittel zum Erhalten eines zweiten komprimierten Werts (DV(s)) durch Anwenden der Kompressionsoperation (110, MDV) auf die Komponenten ($s_i$) des Eingangsdatenelements (s), gegebenenfalls derart korrigiert, dass seine Komponenten Null den Wert "1" annehmen, wobei die Kompressionsoperation die Multiplikation (MDV) der Komponenten ($s_i$) des Eingangsdatenelements (s), gegebenenfalls korrigiert, umfasst;
- ein Mittel zum Bestimmen eines Verifikationswerts (DV(s)') durch Anwenden der Transformation (100, $100_1$-$100_6$) auf den zweiten komprimierten Datenwert (DV(s)); und
- ein Mittel zum Vergleichen (120) des Verifikationswerts und des ersten komprimierten Werts, um die Transformation zu verifizieren.

## Claims

1. Method of cryptographic processing of data (X) comprising at least one round of the Advanced Encryption Standard (AES) comprising at least one transformation (100, $100_1$-$100_6$), component by component, of an input data item (s) comprising a plurality of components ($s_i$) into a result data item (s') comprising a plurality of components ($s'_i$), said transformation being the nonlinear multiplicative inverse transformation MIT of the SubBytes operation of a round of the Advanced Encryption Standard AES, the method comprising a step (E204) of verification of said transformation, **characterized in that** the verification of the transformation comprises the following steps:

- obtaining (E206) a first compressed value (DV(s')) by application, to the components ($s'_i$) of said result data item (s'), of a compression operation (110, MDV) comprising the multiplication (MDV) of components ($s'_i$) of the result data item (s'), possibly corrected such that its zero components take the value "1";
- obtaining (E208) a second compressed value (DV(s)) by application of the compression operation (110, MDV) to the components ($s_i$) of said input data item (s) possibly corrected such that its zero components take the value "1", the compression operation comprising the multiplication (MDV) of the components ($s_i$) of the possibly corrected input data item (s);
- determining (E210) a verification value (DV(s)') by application of said transformation (100, $100_1$-$100_6$) to said second compressed value (DV(s)) and;
- comparing (E212) said verification value and said first compressed value.

2. Method according to Claim 1, wherein at least one error is generated (E214) if said verification value and said first compressed value are different.

3. Method according to Claim 1 or 2, wherein the compressed value (DV(s), DV(s)') is the product of all the components

$$(\mathbf{s}): \quad DV = \prod_{i} x_i \ ,$$

of the result data item (s') or input data item                 where DV is the compressed value, $x_i$ are the components of the result or input data item, and the zero components $x_i$ are corrected so as to take the value "1" in said product.

4. Method according to one of Claims 1 to 3, wherein the verification step (E204) comprises the verification (E205, E205') that to a zero component of the input data item (s) there corresponds a zero component of the result data item (s')

5. Method according to Claim 4, wherein the verification (E205, E205') that to a zero component of the input data item (s) there corresponds a zero component of the result data item (s') comprises the verification that the result of the following formula is zero:

$$\sum_{i=0}^{15} 2^i \delta_0(s_i) \oplus \sum_{i=0}^{15} 2^i \delta_0(s'_i) \quad ,$$

where $s_i$ are the components of the input data item (s), $s'_i$ are the components of the result data item (s') and $\delta_0(x)$ is a Dirac having the value 1 if x=0 and otherwise having the value 0.

6. Method according to any of the preceding claims, wherein said obtaining, determination and comparison steps are duplicated (E204') with at least one second compression operation (MDV$_3$).

7. Method according to Claim 6, wherein said second compression operation (MDV$_3$) is of the form

$$DV = \prod_{i} \left( x_i + \delta_0(x_i) \right)^{i+1}$$

, where DV is the compressed value, $x_i$ are the components of the result data item (s') or input data item (s).

8. Method according to any of the preceding claims, wherein the cryptographic processing comprises a plurality of consecutive transformations ($100_1$-$100_6$) for generating encrypted data (Y), and the method comprises such verification (E204) for each of a plurality of said transformations.

9. Method according to the preceding claim, wherein, for consecutive first and second transformations, said obtaining (E206) of a first compressed value (DV$_1$(s')) for the first transformation (Transfo.1) is after the application of the second transformation (Transfo.2) to the components of the result data item (s') of the first transformation and the step (E208) of obtaining a given compressed value (DV$_2$(s')) for said second transformation.

10. Method according to any of the preceding claims, wherein the cryptographic processing is of symmetrical type.

11. Device for cryptographic processing of data (X) comprising at least one round of the Advanced Encryption Standard (AES) comprising at least one transformation (100, $100_1$-$100_6$), component by component, of an input data item (s) comprising a plurality of components ($s_i$) into a result data item (s') comprising a plurality of components ($s'_i$), said transformation being the nonlinear multiplicative inverse transformation MIT of the SubBytes operation of a round of the Advanced Encryption Standard AES, the device being **characterized in that** it comprises:

    - means for obtaining a first compressed value (DV(s')) by application, to the components ($s'_i$) of said result data item (s'), of a compression operation (110, MDV) comprising the multiplication (MDV) of the components ($s'_i$) of the result data item (s') possibly corrected such that its zero components take the value "1";
    - means for obtaining a second compressed value (DV(s)) by application of the compression operation (110, MDV) to the components ($s_i$) of said input data item (s) possibly corrected such that its zero components take the value "1", the compression operation comprising the multiplication (MDV) of the components ($s_i$) of the input data item (s) possibly corrected;
    - means for determining a verification value (DV(s)') by application of said transformation (100, $100_1$-$100_6$) to said second compressed value (DV(s)) and;

- means (120) for comparing said verification value and said first compressed value, so as to verify said transformation.

**Figure 1**

**Figure 2**

EP 2 280 511 B1

Cryptage AES – 10/14 rondes

SubByte

message

X=(x₀,…,x₁₅)

$s_1$ MIT $s'_1$ $s_2$ AT $s'_2$ $s_3$ ShiftRows $s'_3$ $s_4$ MixColumns $s'_4$ $s_5$ AddRoundKey $s'_5$

mess.
crypté

Y=
(y₀,…,y₁₅)

100₅  100₁  100₆   100₂      100₃      100₄

**Figure 3**

s
(s₀,…,s₁₅)

s → Transfo. → s' → Hash. 110 → DV(s') → 120 =? → oui → continue

Hash. 110 → DV(s) → Transfo. 100 → DV(s)' →

non
faute
détectée

**Figure 4**

**Figure 5**

**Figure 6**

**Figure 7**

**Figure 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005088895 A
- WO 2006103341 A
- FR 2919739

**Littérature non-brevet citée dans la description**

- **KARPOVSKY et al.** *Differential Fault Analysis Attack Resistant Architectures for the Advanced Encryption STANDARD,* 24 Août 2004